# EUROPEAN PATENT APPLICATION

(11) **EP 3 989 084 A1**
(43) Date of publication of application: **27.04.2022**
(21) Application number: 19934007.6
(22) Date of filing: 19.06.2019
(51) Int. Cl.: G06F 16/9038

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: DONG Tingting, Tokyo 108-8001 (JP)
(74) Representative: Betten & Resch
(86) International application number: PCT/JP2019/024343
(87) International publication number: WO 2020/255307

(57) **Abstract**

The present invention assists a user in knowing a target that satisfies a plurality of search conditions. A search unit (10) searches for a target that satisfies one or more inputted search conditions. On the basis of the result of the search by the search unit (10), a presentation unit (20) presents, in a list, which search condition or conditions the target satisfies and which search condition or conditions the target does not satisfy, among the one or more search conditions.

## Description

### [Technical Field]

The present invention relates to an information processing device, an information processing method, and a recording medium, and more particularly relates to an information processing device, an information processing method, and a recording medium that execute search processing based on a search condition.

### [Background Art]

PTL 1 describes an information search method of searching for an image that matches a search condition using one or more input keywords as a search condition. In PTL 1, for each image obtained as a result of a search, one search condition (that is, one keyword) satisfied by the image is presented. Therefore, the user can easily know on which search condition the image has been obtained.

### [Citation List]

### [Patent Literature]

[PTL 1] JP 2013-3727 A

### [Summary of Invention]

### [Technical Problem]

In the information search method described in PTL 1, when a search using a plurality of search conditions is executed, a user cannot know a target that satisfies two or more search conditions that are all or a part of the plurality of search conditions.

An object of the present invention is to assist in knowing a target that satisfies a plurality of search conditions.

### [Solution to Problem]

An information processing device according to an aspect of the present invention includes a search means configured to search for a target that satisfies at least one of one or more search conditions that have been input, and a presentation means configured to present, in a list, which search condition or conditions the target satisfies and which search condition or conditions the target does not satisfy among the one or more search conditions, based on a result of the search by the search means.

An information processing method according to an aspect of the present invention includes searching for a target that satisfies at least one of one or more search conditions that have been input, and presenting, in a list, which search condition or conditions the target satisfies and which search condition or conditions the target does not satisfy among the one or more search conditions, based on a result of the search.

A recording medium according to an aspect of the present invention stores a program for causing a computer to execute searching for a target that satisfies at least one of one or more search conditions that have been input, and presenting, in a list, which search condition or conditions the target satisfies and which search condition or conditions the target does not satisfy among the one or more search conditions, based on a result of the search.

### [Advantageous Effects of Invention]

According to the present invention, it is possible to assist in knowing a target that satisfies a plurality of search conditions.

### [Brief Description of Drawings]

Fig. 1 is a block diagram illustrating a configuration of an information processing device according to a first example embodiment.
Fig. 2 is a flowchart illustrating a flow of operation of the information processing device according to the first example embodiment.
Fig. 3 is a diagram illustrating an example of a search screen on which a search unit of the information processing device according to the first example embodiment receives an input of a search condition.
Fig. 4 is a diagram illustrating an example of a list presented by a presentation unit of the information processing device according to the first example embodiment.
Fig. 5 is a chart illustrating another example of the list presented by the presentation unit of the information processing device according to the first example embodiment.
Fig. 6 is a diagram illustrating still another example of the list presented by the presentation unit of the information processing device according to the first example embodiment.
Fig. 7 is a block diagram illustrating a configuration of an information processing device according to a second example embodiment.
Fig. 8 is a flowchart illustrating a flow of operation of the information processing device according to the second example embodiment.
Fig. 9 is a diagram illustrating an example of a search screen on which a search unit of the information processing device according to the second example embodiment receives an input of a search condition.
Fig. 10 is a block diagram illustrating a configuration of an information processing device according to a third example embodiment.
Fig. 11 is a flowchart illustrating a flow of operation of the information processing device according to the third example embodiment.
Fig. 12 is a diagram illustrating an example of a recommendation screen on which a recommendation unit of the information processing device according to the third example embodiment recommends a search using another search condition.
Fig. 13 is a diagram illustrating a hardware configuration of an information processing device according to a fourth example embodiment.

### [Example embodiment]

### [First example embodiment]

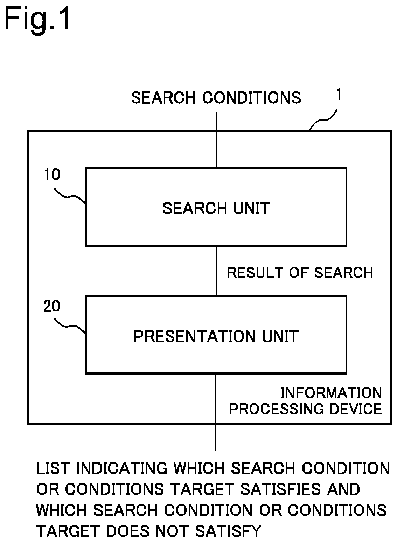

A configuration of an information processing device 1 according to a present first example embodiment will be described with reference to Figs. 1 to 6.

### (Information processing device 1)

Fig. 1 is a block diagram illustrating a configuration of an information processing device 1 according to the present first example embodiment. As illustrated in Fig. 1, the information processing device 1 includes a search unit 10 and a presentation unit 20.

The search unit 10 searches for a target that satisfies at least one of one or more search conditions that have been input. The search unit 10 is an example of a search means.

Specifically, the search unit 10 uses one or more keywords, images, or the like that have been input by the user as search conditions to search a database (not illustrated), for a target that satisfies each search condition. For example, when the search target is image data of a person, the search condition may be a keyword representing one or more attributes (sex, age, length of hair, color of hair, type of clothes, belongings, and the like) of the person.

The search unit 10 presents a search screen and receives an input of a search condition from the user. For example, when the user inputs one or more keywords on the search screen using an input device such as a keyboard and a mouse, the search unit 10 acquires the one or more input keywords as one or more search conditions.

Using the acquired one or more search conditions, the search unit 10 acquires one or a plurality of pieces of image data that matches each search condition from the database. In the present first example embodiment, the image data stored in the database is a target of the search by the search unit 10. A result of the search by the search unit 10 includes one or a plurality of pieces of image data that satisfies at least one of the one or more input search conditions. The information processing device 1 may include a database or may be connected to the database via a network.

The search unit 10 transmits the above-described result of the search to the presentation unit 20. The result of the search at least includes one or a plurality of pieces of image data that satisfies at least one of the one or more input search conditions and information for specifying each target. For example, when the search target is image data stored in a database, the result of the search includes an image identification (ID) added to each piece of image data in the database.

The presentation unit 20 presents, in a list, which search condition or conditions the target satisfies and which search condition or conditions the target does not satisfy among the one or more search conditions on the basis of the result of the search by the search unit 10. The presentation unit 20 is an example of a presentation means.

Specifically, the presentation unit 20 receives the result of the search from the search unit 10. On the basis of the result of the search received from the search unit 10, the presentation unit 20 generates a list indicating which search condition or conditions the target satisfies and which search condition or conditions the target does not satisfy among the one or more search conditions. The presentation unit 20 presents the list thus generated by outputting the list to a display, which is not illustrated, or the like. The presentation unit 20 may present the list by any method.

For example, the presentation unit 20 presents the list by using a bar graph assigned to each of the search conditions. Alternatively, the presentation unit 20 presents a two-dimensional graph in which one axis is related to the search condition and the other axis is related to the search target on the display. In this graph, which search condition or conditions the target satisfies and which search condition or conditions the target does not satisfy among the one or more search conditions are indicated by a number, a symbol, a character, a figure, or a picture.
Some examples of presentation by the presentation unit 20 will be described later.

### (Operation flow of information processing device 1)

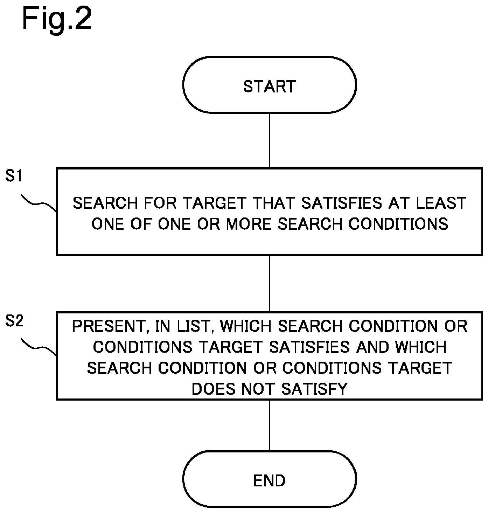

A flow of operation of the information processing device 1 according to the present first example embodiment will be described with reference to Fig. 2. Fig. 2 is a flowchart illustrating a flow of processing executed by each unit of the information processing device 1.

As illustrated in Fig. 2, the search unit 10 searches for a target that satisfies at least one of the one or more input search conditions (S1).
The search unit 10 transmits a result of the search to the presentation unit 20. As described above, the result of the search at least includes one or a plurality of pieces of image data that satisfies at least one of the one or more input search conditions and information for specifying each target.

The presentation unit 20 receives the result of the search from the search unit 10. On the basis of the result of the search received from the search unit 10, the presentation unit 20 presents, in a list, which search condition or conditions each target satisfies and which search condition or conditions each target does not satisfy (S2). For example, the presentation unit 20 presents the list by using a bar graph assigned to each of the search conditions.

Thus, the operation of the information processing device 1 ends.

### (Example of search screen)

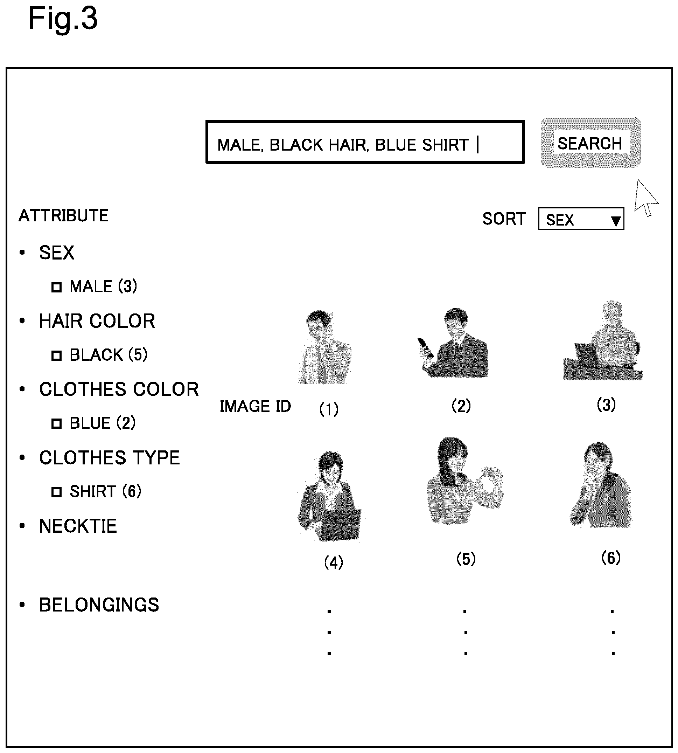

A search screen on which the search unit 10 receives an input of a search condition from the user will be described with reference to Fig. 3. Fig. 3 illustrates an example of the search screen displayed on a display or the like. The search screen illustrated in Fig. 3 includes a search box. In the search box, one or more keywords are input as one or more search conditions.

In Fig. 3, three keywords "male, black hair, blue shirt" are shown in the search box. When the user presses or clicks the "search" key on the right of the search box, the search unit 10 executes a search using the three keywords input in the search box.

The search unit 10 executes what is called OR search. That is, the search unit 10 searches the database for each piece of the image data of the person classified into the attribute indicated by one of the three keywords "male", "black hair", and "blue shirt" illustrated in Fig. 3.

The search unit 10 may use supervised learning or unsupervised learning to search for the image data of a person classified into the attribute indicated by the keywords.

Specifically, the search unit 10 first specifies feature data related to the input keywords. For example, the search unit 10 specifies the feature data related to the input keywords by referring to a table, which is not illustrated, in which the keywords and the feature data are associated with each other.

Alternatively, the search unit 10 collects sample images tagged with the input keywords from a server on any network. Then, the search unit 10 extracts the feature data from the collected sample image. The feature data includes, for example, a feature vector. The search unit 10 associates the feature data extracted from the sample image with the input keyword.

Next, the search unit 10 extracts the feature data from the image data on the database. Alternatively, the search unit 10 may extract the feature data in advance from the image data on the database. The search unit 10 calculates a similarity between the feature data extracted from the image data on the database and the feature data related to the keyword. The similarity may be based on, for example, a distance between feature vectors included in the feature data.

The search unit 10 extracts, from all the image data on the calculation database, image data of which calculated similarity exceeds a threshold or several (2 or 3) pieces of high-ranking image data in descending order of similarity. The search unit 10 outputs the image data thus extracted as the result of the search.

Alternatively, the image data of the person in the database may be classified or clustered in advance for each attribute of the person. For example, information indicating an attribute of a person is associated with each piece of the image data of the person in the database.

The search unit 10 specifies an attribute related to the input keyword by referring to a table, which is not illustrated, in which the keyword and the attribute of the person are associated with each other. The search unit 10 compares the information indicating the attribute of the person indicated by the input keyword with the information indicating the attribute of the person associated with the image data of the person. Then, the search unit 10 searches the database for the image data of the person classified into the same attribute as the attribute of the person indicated by the keyword.

The presentation unit 20 presents a list of image data of persons obtained as results of the search. For example, the presentation unit 20 presents a list of image data of persons obtained as the results of the search on a display, which is not illustrated.

Fig. 3 illustrates image data of six persons as an example of the results of the search. The image data of the six persons satisfies one of the search conditions. Under each piece of the image data, one of different numbers ((1) to (6)) is indicated. These numbers each represent an image ID added to the image data of each person.

Here, the "attribute" of a person is an appearance feature of the person. In Fig. 3, the list of attributes includes, for example, gender, hair color, clothes color, clothes type, necktie, and belongings.
However, the attribute of the person is not limited thereto. In Fig. 3, the symbol "black (5)" related to the hair color, which is one of the attributes, indicates that five people with black hair are included in the results of the search. That is, "black" represents a feature related to one attribute, and the number in parentheses represents the number of persons.

As described above, on the basis of the results of the search, the presentation unit 20 presents, in a list, which search condition or conditions the target satisfies and which search condition or conditions the target does not satisfy among the one or more search conditions. Hereinafter, some examples of the presentation of the list by the presentation unit 20 will be described.

### (First example of presentation of list)

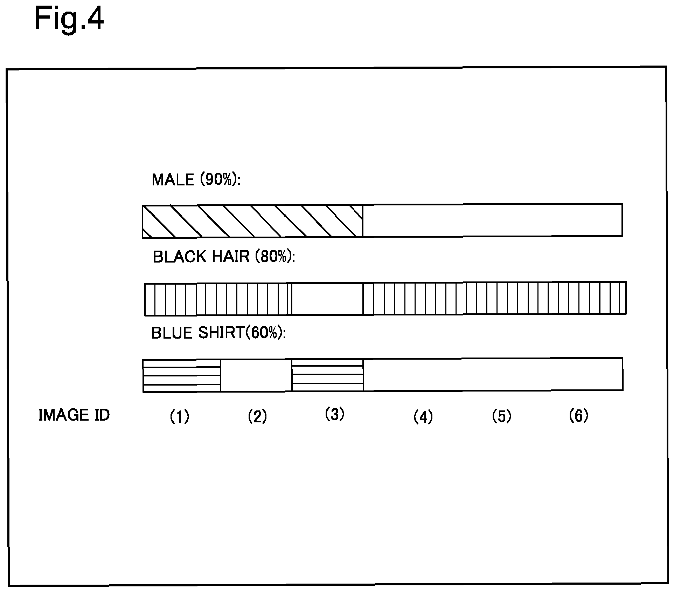

Fig. 4 illustrates an example of a list presented by the presentation unit 20. Fig. 4 is a chart including three bar graphs each assigned to one search condition. The three bar graphs illustrated in Fig. 4 are related to the three search conditions that have been input (that is, "male", "black hair", and "blue shirt"). Numerical values (90%, 80%, and 60%) indicated in parentheses next to the search conditions represent lower limit values of a certainty factor. The certainty factor represents likelihood that the target satisfies the search condition. As the numerical value is larger, it is highly possible (that is, more likely) that the target satisfies the search condition. For example, all targets included in the results of the search with the attribute "male" as the search condition have a certainty factor of equal to or more than 90%.
In other words, a target for which the certainty factor of being classified as "male" is less than 90% does not appear on the search screen illustrated in Fig. 3. In the present first example embodiment, the lower limit value of the certainty factor is set to a predetermined value in advance. However, as described in the second example embodiment, the lower limit value of the certainty factor may be variable.

In the bar graphs illustrated in Fig. 4, whether the plurality of search conditions is satisfied by the targets included in the results of the search is each represented by the presence or absence of one of oblique line, vertical line, or horizontal line patterns in the bar graphs.

For example, in the uppermost bar graph illustrated in Fig. 4, oblique lines are added to only the portion corresponding to the three targets specified by the image IDs (1) to (3) on the horizontal axis.
Thus, the three targets specified by the image IDs (1) to (3) are classified into the search condition "male". In other words, the uppermost bar graph of the chart in Fig. 4 indicates that the three pieces of image data specified by the image IDs (1) to (3) are male images with likelihood equal to or more than the lower limit value of the certainty factor (that is, 90%).

### (Example 2 of presentation of list)

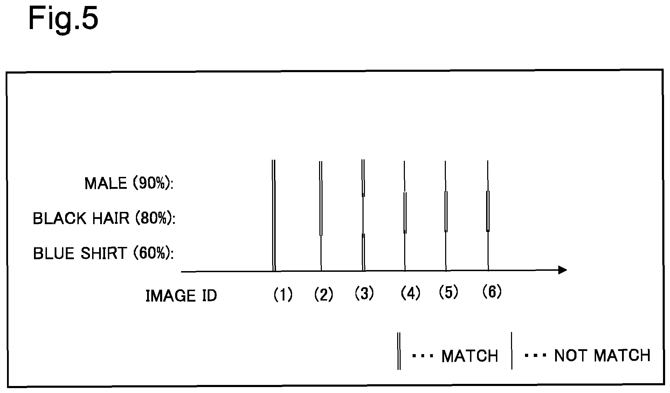

Fig. 5 illustrates another example of the list presented by the presentation unit 20. Fig. 5 is a chart in which bar graphs assigned one-to-one to the search conditions are connected in the vertical direction of the diagram. Fig. 5 illustrates whether one target related to a bar graph satisfies each of the three search conditions that have been input. Also in Fig. 5, similarly to Fig. 4, numerical values indicated next to the three search conditions represent the lower limit values of the certainty factor.

In Fig. 5, the six bar graphs are related one-to-one to the six targets (image IDs (1) to (6)) that have been searched for. For example, the leftmost bar graph is related to the target image data specified by the image ID (1).

In Fig. 5, in the leftmost bar graph, the portion corresponding to the three search conditions (that is, "male", "black hair", and "blue shirt") are represented by double lines. Thus, it can be seen that the target specified by the image ID (1) satisfies all the above three search conditions.

On the other hand, in Fig. 5, in the second bar graph from the left, only the portion corresponding to two search conditions (that is, "male" and "black hair") is represented by double lines, and the portion corresponding to the remaining one search condition (that is, "blue shirt") is represented by a single line. Thus, it can be seen that the target specified by the image ID (2) satisfies only two search conditions (that is, "male" and "black hair").

### (Example 3 of presentation of list)

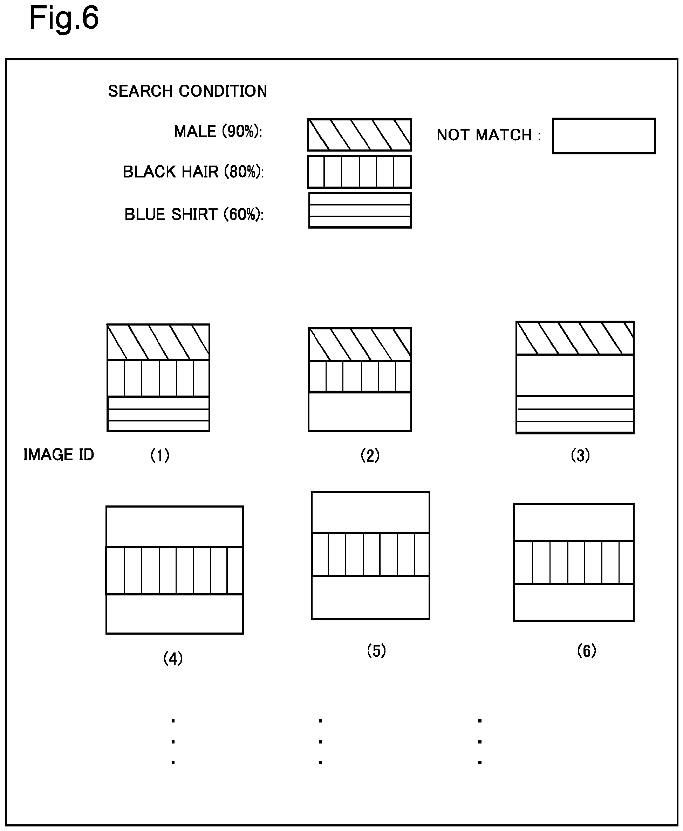

Fig. 6 illustrates still another example of the list presented by the presentation unit 20. Fig. 6 includes six charts assigned one-to-one to the targets. The six charts illustrated in Fig. 6 are related one-to-one to the six targets (image IDs (1) to (6)) illustrated in Fig. 3. In Fig. 6, similarly to Figs. 4 and 5, numerical values next to the search conditions that have been input represent the lower limit values of the certainty factor.

The positions, shapes, and sizes of the six charts correspond to the positions, shapes, and sizes of the six targets on the search screen illustrated in Fig. 3. Thus, the user can easily understand which person's image data the six charts illustrated in Fig. 6 are each related to.

In Fig. 6, which search condition or conditions the target satisfies and which search condition or conditions the target does not satisfy among the one or more search conditions are represented by diagonal lines, vertical lines, or horizontal lines in the chart. For example, vertical lines are added to the lower right chart related to the target specified by the image ID (6). These vertical lines correspond to the search condition of "black hair". Thus, it can be seen that the target specified by the image ID (6) satisfies only the search condition of "black hair" at least with the likelihood of the lower limit value of the certainty factor.

### (Effect of present example embodiment)

The search unit 10 searches for a target that satisfies one or more search conditions that have been input, and the presentation unit 20 presents, in a list, which search condition or conditions the target satisfies and which search condition or conditions the target does not satisfy among the one or more search conditions on the basis of a result of the search by the search unit 10. In a case where a plurality of search conditions is input, the user can check the presented list and understand a target that satisfies two or more search conditions that are all or a part of the plurality of search conditions. Therefore, it is possible to assist in knowing a target that satisfies a plurality of search conditions.

### [Second example embodiment]

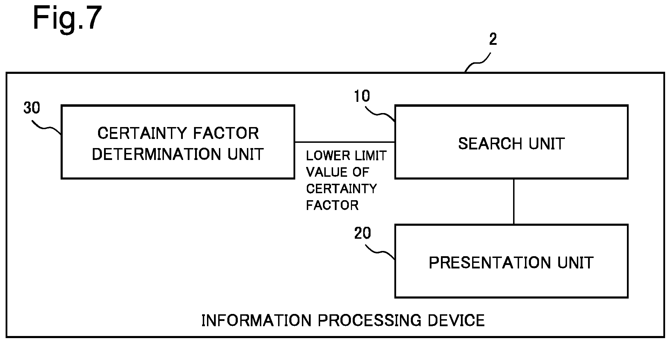

A present second example embodiment will be described with reference to Figs. 7 to 9.

### (Information processing device 2)

Fig. 7 is a block diagram illustrating a configuration of an information processing device 2 according to the present second example embodiment. As illustrated in Fig. 7, the information processing device 2 includes a search unit 10, a presentation unit 20, and a certainty factor determination unit 30. That is, the information processing device 2 according to the present second example embodiment is different from the information processing device 1 according to the first example embodiment in configuration in that the information processing device 2 includes the certainty factor determination unit 30.

The certainty factor determination unit 30 determines a lower limit value of the certainty factor that is a value representing likelihood of a result of a search. The certainty factor determination unit 30 is an example of a certainty factor determination means. The lower limit value of the certainty factor is a criterion when the search unit 10 executes the search.

In the first example embodiment, the lower limit value of the certainty factor is a fixed value that is set in advance. On the other hand, in the present second example embodiment, the lower limit value of the certainty factor is determined on the basis of a user operation. In the present second example embodiment, an initial value of the lower limit value of the certainty factor is set in advance. However, the lower limit value of the certainty factor is variable.

A specific example of enabling the user to perform an operation (user operation) for changing the lower limit value of the certainty factor from the search screen will be described later. The certainty factor determination unit 30 transmits information on the lower limit value of the certainty factor determined on the basis of the user operation to the search unit 10.

The search unit 10 executes a search for the target using the lower limit value of the certainty factor. More specifically, the search unit 10 searches for a target for which a value representing likelihood of satisfying the search condition necessarily exceeds the lower limit value of the certainty factor. For example, in a case where the search condition is "male" and the lower limit value of the certainty factor is 80%, only a target for which the probability that the attribute of the target is "male" exceeds 80% is included in results of the search by the search unit 10.

The certainty factor determination unit 30 presents the lower limit value of the certainty factor determined for each search condition. For example, the certainty factor determination unit 30 presents the lower limit value of the certainty factor determined for each search condition on a slide bar.

The certainty factor determination unit 30 receives a user operation for changing the lower limit value of the current certainty factor for each search condition. For example, the certainty factor determination unit 30 receives a user operation of moving a slider on the slide bar. In this case, the certainty factor determination unit 30 determines the lower limit value of the certainty factor on the basis of the position of the slider on the slide bar. An example of presentation of the lower limit value of the certainty factor by the certainty factor determination unit 30 will be described later.

### (Operation flow of information processing device 2)

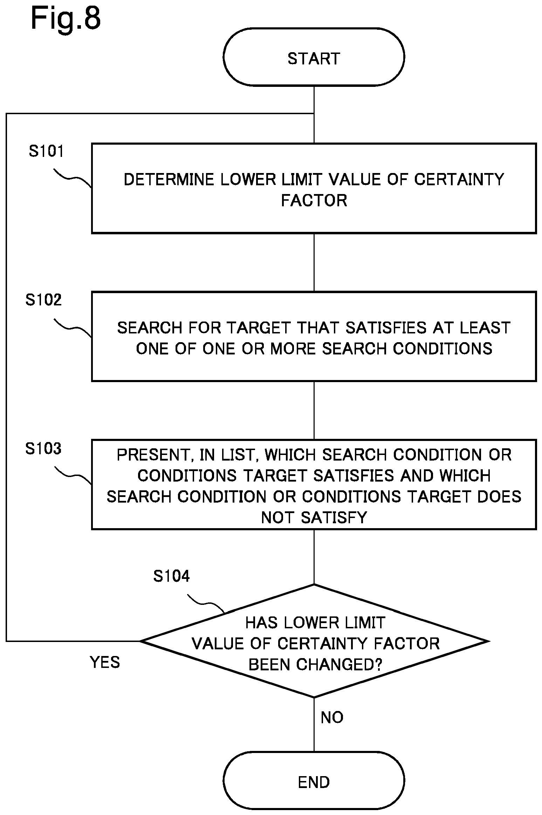

A flow of operation of the information processing device 2 according to the present first example embodiment will be described with reference to Fig. 8. Fig. 8 is a flowchart illustrating a flow of processing executed by each unit of the information processing device 2.

As illustrated in Fig. 8, the certainty factor determination unit 30 determines the lower limit value of the certainty factor (S101). When the user performs the user operation for changing the lower limit value of the certainty factor, the lower limit value of the certainty factor is freely selected by the user. On the other hand, in a case where the user has never changed the lower limit value of the certainty factor, the lower limit value of the certainty factor is an initial value that is set in advance.
The certainty factor determination unit 30 transmits information of the determined lower limit value of the certainty factor to the search unit 10.

The search unit 10 receives the information of the lower limit value of the certainty factor from the certainty factor determination unit 30. The search unit 10 searches for a target that satisfies at least one of one or more search conditions using the lower limit value of the certainty factor (S102). The search unit 10 transmits a result of the search to the presentation unit 20.

As described in the first example embodiment, the result of the search at least includes one or a plurality of pieces of image data that satisfies at least one of one or more search conditions that have been input and information for specifying each target.

The presentation unit 20 receives the result of the search from the search unit 10. The presentation unit 20 presents, in a list, which search condition or conditions the target satisfies and which search condition or conditions the target does not satisfy (S103). For example, as described in the first example embodiment, the presentation unit 20 displays a chart including bar graphs assigned one-to-one to the search conditions on the display (see, for example, Fig. 4 of the first example embodiment).

The certainty factor determination unit 30 determines whether the user operation for changing the lower limit value of the certainty factor has been performed (S104).

In a case where the user operation for changing the lower limit value of the certainty factor has not been performed (No in S104), the operation of the information processing device 2 ends.

On the other hand, in a case where the user operation for changing the lower limit value of the certainty factor has been performed (Yes in S104), the flow returns to step S101. In step S101, the certainty factor determination unit 30 adjusts the lower limit value of the certainty factor on the basis of the user operation. Thereafter, the flow proceeds to step S102 described above.

### (Presentation of lower limit value of certainty factor; example of search screen)

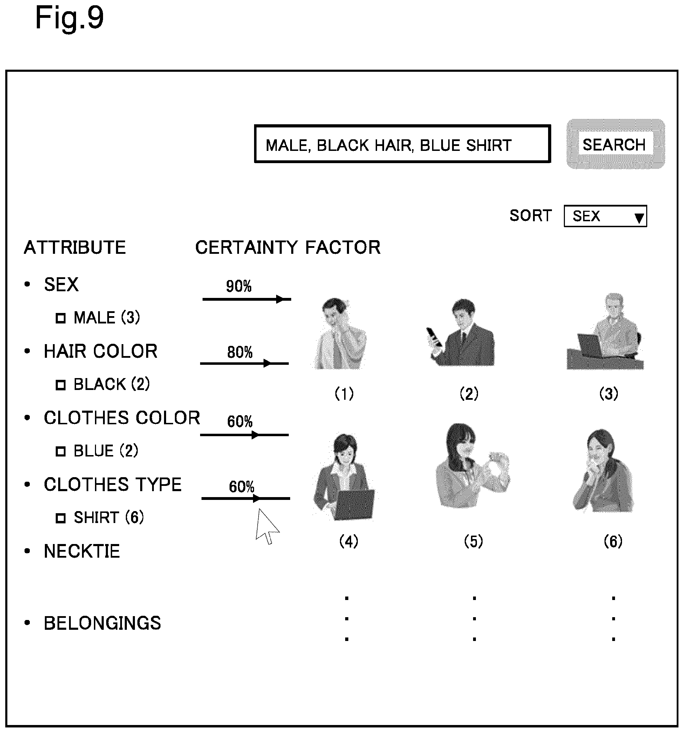

An example of presentation of the lower limit value of the certainty factor by the certainty factor determination unit 30 will be described with reference to Fig. 9. In addition, an example of the user operation for changing the lower limit value of the certainty factor will be described. Fig. 9 illustrates an example of a search screen according to the present second example embodiment. In the search screen illustrated in Fig. 9, the lower limit value of the current certainty factor is indicated by a numerical value (60%, 60%, 80%, or 90%) for each attribute.

A slide bar is displayed below the numerical value representing the lower limit value of the current certainty factor. The left end of the slide bar is related to the lowest certainty factor (0%) and the right end of the slide bar is related to the highest certainty factor (100%). The user performs the user operation for changing the lower limit value of the certainty factor. Specifically, the user changes the lower limit value of the certainty factor by moving a slider on the slide bar. In Fig. 9, a triangular figure on the slide bar is the slider moved by the user.

The certainty factor determination unit 30 determines the lower limit value of the current certainty factor in accordance with the amount of movement of the slider. In Fig. 9, the slider is a triangle, but the shape and form of the slider are not particularly limited. The certainty factor determination unit 30 transmits information of the determined lower limit value of the certainty factor to the search unit 10.

When the information of the lower limit value of the certainty factor determined by the certainty factor determination unit 30 is received or when the search key is pressed or clicked, the search unit 10 researches for the target using the lower limit value of the certainty factor determined by the certainty factor determination unit 30.

### (Effect of present example embodiment)

According to the configuration of the present embodiment, the search unit 10 searches for a target that satisfies one or more search conditions that have been input, and the presentation unit 20 presents, in a list, which search condition or conditions the target satisfies and which search condition or conditions the target does not satisfy among the one or more search conditions, on the basis of a result of the search by the search unit 10. In a case where a plurality of search conditions is input, the user can check the presented list and understand a target that satisfies two or more search conditions that are all or a part of the plurality of search conditions. Therefore, it is possible to assist in knowing a target that satisfies a plurality of search conditions.

Further, the certainty factor determination unit 30 determines a lower limit value of the certainty factor that is a value representing likelihood of the result of the search. The search unit 10 executes a search for the target using the lower limit value of the certainty factor. Therefore, it is possible to obtain, as the result of the search, a target for which a value representing the likelihood of satisfying the search condition exceeds the lower limit value of the certainty factor.

### [Third example embodiment]

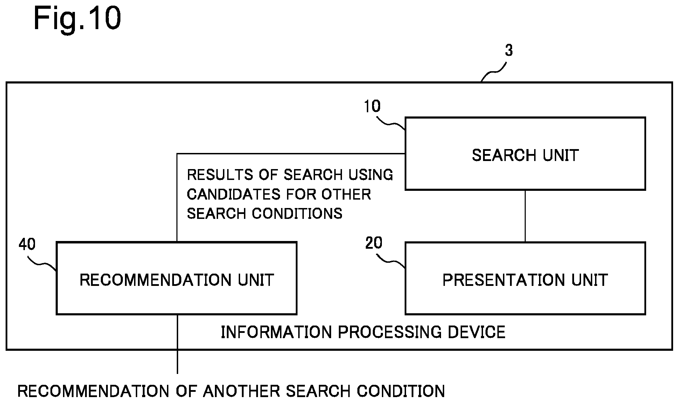

A present third example embodiment will be described with reference to Figs. 10 to 12.

### (Information processing device 3)

Fig. 10 is a block diagram illustrating a configuration of the information processing device 3 according to the present third example embodiment. As illustrated in Fig. 10, the information processing device 3 includes a search unit 10, a presentation unit 20, and a recommendation unit 40. That is, the information processing device 3 according to the present third example embodiment is different from the information processing device 1 according to the first example embodiment in configuration in that the information processing device 3 includes the recommendation unit 40.

The recommendation unit 40 recommends another search condition for further narrowing targets included in results of the search. The recommendation unit 40 is an example of a recommendation means.

Specifically, the recommendation unit 40 receives, from the search unit 10, results of the search using one or a plurality of candidates for other search conditions (hereinafter, may be referred to as second search conditions) different from one or more search conditions that have been input (hereinafter, may be referred to as first search conditions). The results of the search include information indicating whether the target satisfies or does not satisfy the candidates for the other search conditions (second search conditions). The results of the search include information for specifying the targets included in the results of the search.

The recommendation unit 40 selects another search condition that is recommended (hereinafter, may be referred to as a third search condition) from among the one or the plurality of candidates for the other search conditions (second search conditions) on the basis of the received results of the search.

Specifically, the recommendation unit 40 preferably selects, as the another search condition that is recommended (third search condition), a candidate for the other search conditions (second search conditions) by which the targets are divided as equal as possible.

That is, the recommendation unit 40 preferably determines the another search condition that is recommended (third search condition) by which the targets that satisfy the one or more input search conditions (first search conditions) are divided into about 50% that satisfies the another search condition and about 50% that does not satisfy the another search condition, or the targets are as close as possible to the ratio of 50% : 50%. One of the reasons is to reduce, when examination of the targets is shared by two or more users, deviation between a cost for examining all targets that satisfy the another search condition (user's labor) and a cost for examining all targets that do not satisfy the another search condition.

The recommendation unit 40 recommends the another search condition determined in this manner to the user. For example, the recommendation unit 40 presents a message or the like prompting addition of the another search condition.

In addition, the recommendation unit 40 presents a result of the search in a case where the search for the target is performed using the another search condition. For example, the recommendation unit 40 presents the result of the search in a circular graph in a case where the another search condition is used. An example of presentation by the recommendation unit 40 will be described later.

### (Operation flow of information processing device 3)

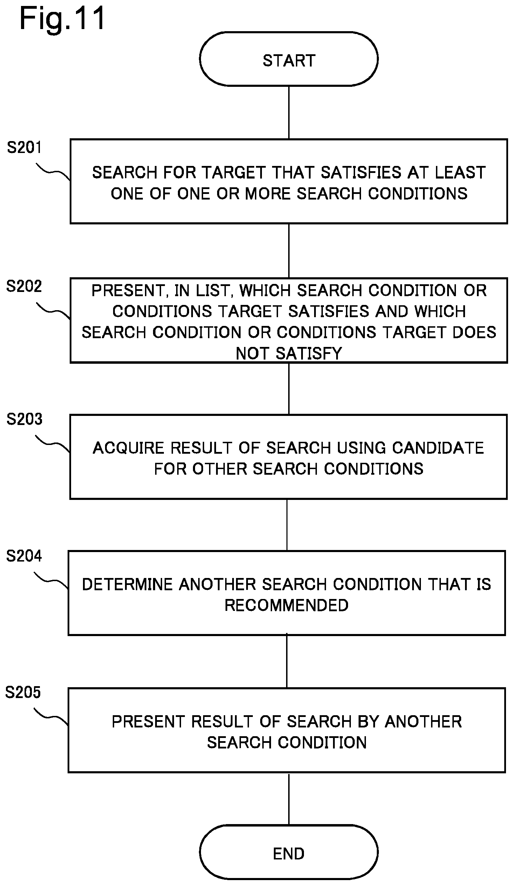

The flow of the operation of the information processing device 3 according to the present third example embodiment will be described with reference to Fig. 11. Fig. 11 is a flowchart illustrating a flow of processing executed by each unit of the information processing device 3.

As illustrated in Fig. 11, the search unit 10 searches for a target that satisfies at least one of the one or more input search conditions (first search conditions) using the lower limit value of the certainty factor (S201). Also in the present third example embodiment, similarly to the first example embodiment, the lower limit value of the certainty factor is fixed. However, in a modification example, the information processing device 3 may include the certainty factor determination unit 30 described in the second example embodiment. In this case, the lower limit value of the certainty factor is variable, and the lower limit value of the certainty factor is determined on the basis of a user operation.

The search unit 10 transmits the result of the search using the first search condition to the presentation unit 20. As described in the first example embodiment, the result of the search includes information indicating which search condition each target satisfies or does not satisfy, and information for specifying each target.

The presentation unit 20 presents, in a list, which search condition or conditions the target satisfies and which search condition or conditions the target does not satisfy among the one or more search conditions of the target on the basis of the result of the search by the search unit 10 (S202). For example, as in the first example embodiment, the presentation unit 20 displays a chart including bar graphs assigned one-to-one to the search conditions on the display (see Fig. 4).

The recommendation unit 40 acquires a result of the search using the one or the plurality of candidates for the other search conditions (second search conditions) from the search unit 10 (S203).

The recommendation unit 40 determines the another search condition (third search condition) that is recommended on the basis of the result of the search using the one or the plurality of candidates for the other search conditions (second search conditions) (S204). As described above, the recommendation unit 40 preferably selects, as the another search condition, a candidate for the other search conditions (second search conditions) by which the targets are divided as equal as possible.

The recommendation unit 40 presents a result of the search by the selected another search condition (S205).

Thus, the operation of the information processing device 3 ends. The steps S201 and S202 and the steps S203 to S205 may be performed in any order. That is, the steps S203 to S205 may be executed before the steps S201 and S202.

### (Recommendation of another search condition)

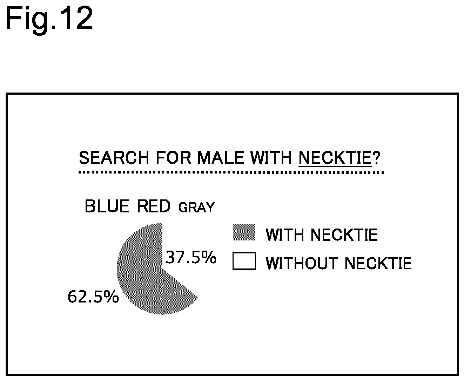

Fig. 12 illustrates an example of presentation for the recommendation unit 40 to recommend the another search condition. As described above, the another search condition that is recommended (third search condition) is determined by the recommendation unit 40. In the example illustrated in Fig. 12, the "necktie" corresponds to the another search condition that is recommended (third search condition).

Fig. 12 is a circular graph illustrating a result of a search when the search using the another search condition that is recommended (that is, "necktie") is executed. However, the result of the search when the search using the another search condition that is recommended (third search condition) is executed may be presented by means other than the circular graph.

According to Fig. 12, when the "necktie" is added to the one or more input search conditions (first search conditions), the target is divided into 62.5% : 37.5% depending on the presence or absence of the necktie. As described above, the ratio is preferably as close as possible to 50% : 50%.

### (Effect of present example embodiment)

According to the configuration of the present embodiment, the search unit 10 searches for a target that satisfies one or more search conditions that have been input, and the presentation unit 20 presents, in a list, which search condition or conditions the target satisfies and which search condition or conditions the target does not satisfy among the one or more search conditions, on the basis of a result of the search by the search unit 10. In a case where a plurality of search conditions is input, the user can check the presented list and understand a target that satisfies two or more search conditions that are all or a part of the plurality of search conditions. Therefore, it is possible to assist in knowing a target that satisfies a plurality of search conditions.

Further, the recommendation unit 40 recommends another search condition for further narrowing the targets included in the result of the search. Accordingly, the user can further narrow the targets included in the result of the search by combining the plurality of search conditions with another search condition.

### [Fourth example embodiment]

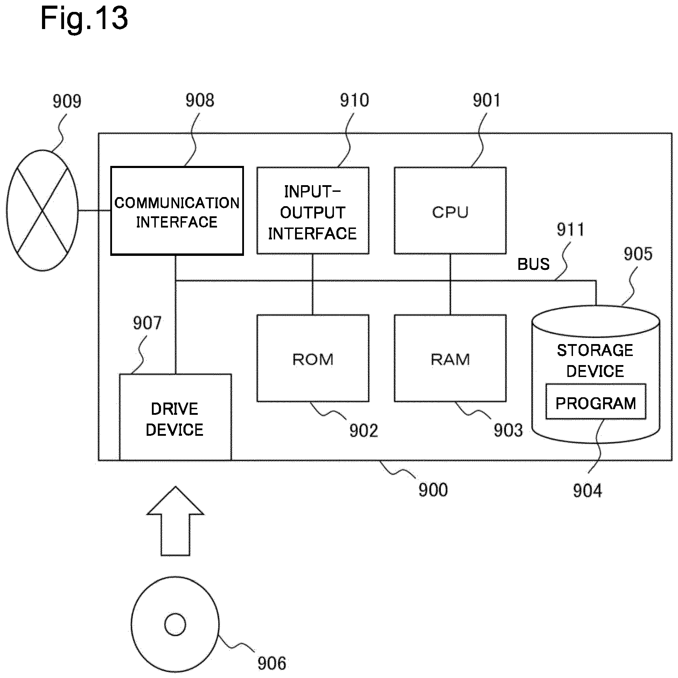

A fourth example embodiment will be described below with reference to Fig. 13.

### (Regarding hardware configuration)

Each component of the information processing device described in the first to third example embodiments indicates a block of a functional unit. A part or all of these components are implemented by an information processing device 900 as illustrated in Fig. 13, for example. Fig. 13 is a block diagram illustrating an example of a hardware configuration of the information processing device 900.

As illustrated in Fig. 13, the information processing device 900 includes the following configuration as an example.

- a central processing unit (CPU) 901
- a read only memory (ROM) 902
- a random access memory (RAM) 903
- a program 904 loaded into the RAM 903
- a storage device 905 storing the program 904
- a drive device 907 that reads from and writes to a recording medium 906
- a communication interface 908 connected to a communication network 909
- an input-output interface 910 for inputting and outputting data
- a bus 911 connecting components

Each component of the information processing device described in the first to third example embodiments is achieved by the CPU 901 reading and executing a program 904 for achieving these functions. The program 904 for achieving the function of each component is stored in the storage device 905 or the ROM 902 in advance, for example, and the CPU 901 loads the program into the RAM 903 and executes the program as necessary. The program 904 may be supplied to the CPU 901 via the communication network 909 or may be stored in the recording medium 906 in advance, and the program may be read and supplied to the CPU 901 by the drive device 907.

### (Effect of present example embodiment)

According to the configurations of the present example embodiments, the information processing device described in the above example embodiments is achieved as hardware. Therefore, effects similar to the effects described in the above example embodiments can be exhibited.

The present invention has been described using the above-described example embodiments as exemplary examples. However, the present invention is not limited to the example embodiments described above. That is, the present embodiment described above can be applied in a variety of modes that can be understood by those skilled in the art within the scope of the present invention.

### [Reference signs List]

- 1: information processing device
- 2: information processing device
- 3: information processing device
- 900: information processing device
- 10: search unit
- 20: presentation unit
- 30: certainty factor determination unit
- 40: recommendation unit

## Claims

1. An information processing device comprising:
a search means configured to search for a target that satisfies at least one of one or more search conditions that have been input; and
a presentation means configured to present, in a list, which search condition or conditions the target satisfies and which search condition or conditions the target does not satisfy, among the one or more search conditions, based on a result of the search by the search means.

2. The information processing device according to claim 1, wherein
the presentation means presents the list by using a bar graph assigned to each of the search conditions.

3. The information processing device according to claim 1 or 2, further comprising
a certainty factor determination means configured to determine a lower limit value of a certainty factor that is a value representing likelihood of the result of the search.

4. The information processing device according to claim 3, wherein
the certainty factor determination means presents a lower limit value of the certainty factor determined for each of the search conditions on a slide bar.

5. The information processing device according to any one of claims 1 to 4, further comprising
a recommendation means configured to recommend another search condition for further narrowing targets included in the result of the search.

6. The information processing device according to claim 5, wherein
the recommendation means
presents the result of the search by the search means when the another search condition is used.

7. The information processing device according to claim 6, wherein
the recommendation means presents, in a circular graph, the result of the search by the search means when the another search condition is used.

8. An information processing method comprising:
searching for a target that satisfies at least one of one or more search conditions that have been input; and
presenting, in a list, which search condition or conditions the target satisfies and which search condition or conditions the target does not satisfy among the one or more search conditions, based on a result of the search.

9. A non-transitory recording medium storing a program for causing a computer to execute:
searching for a target that satisfies at least one of one or more search conditions that have been input; and
presenting, in a list, which search condition or conditions the target satisfies and which search condition or conditions the target does not satisfy among the one or more search conditions, based on a result of the search.

10. An information processing device comprising:
a search means configured to search for a target that satisfies at least one of one or more search conditions that have been input; and
a certainty factor determination means configured to determine a lower limit value of a certainty factor that is a value representing likelihood of a result of the search by the search means.
